# EUROPEAN PATENT APPLICATION

(11) **EP 3 418 560 A1**
(43) Date of publication of application: **26.12.2018**
(21) Application number: 16890411.8
(22) Date of filing: 18.02.2016
(51) Int. Cl.: F03D 17/00, G01N 3/08, G01N 3/20, G01N 3/22, G01N 3/24, G01N 3/32

(54) **TEST BENCH AND METHOD OF USE**

(71) Applicant: Nabrawind Technologies SL, 31002 Pamplona (ES)
(72) Inventor: SANZ PASCUAL, Eneko, 31002 Pamplona (Navarra) (ES); SAVII COSTA, Hely Ricardo, 31133 Uterga (Navarra) (ES)
(74) Representative: Igartua, Ismael
(86) International application number: PCT/ES2016/000025
(87) International publication number: WO 2017/140918

(57) **Abstract**

Test bench for a longitudinal structural element as a blade segment, an intermediate blade joint or other type of structure of a wind turbine, to which a set of multi-axial flexion, torsion, shear and axial loads is applied, characterized in that it is formed by a vertical fixed rigid plate (2), a horizontal structure (7) rigidly joined to the rigid plate (2), a vertical mobile rigid plate (3) and at least two horizontal actuators (4) and another two vertical ones (5) arranged between the mobile rigid plate (3) and the horizontal structure (7); being the specimens or segments (13) anchored between the vertical fixed rigid plate (2) and the vertical mobile rigid plate (3) through a plurality of fastening elements (14). The test method is characterized in that the slow and gradual application of loads until reaching the design load or breaking load and by the continuously cyclical application which makes it possible to accelerate the application frequency and to short the test time compared to the full-scale tests.

## Description

### Field of the invention

The present invention is encompassed within the field of wind turbines and more specifically consists of a test method with different actuators that achieve a multi-axial load application. The associated test bench is also described, in which a longitudinal structural element such as a blade segment, an intermediate blade joint or another type of wind turbine structure is tested under realistic and changing conditions during the test.

### Background of the invention

The process of developing complex structures, such as wind turbine blades or aeronautical components, commonly employs a strategy of block validation, where a series of test campaigns are carried out that progressively increase its complexity:
- In a first step, all the materials to be used in the component are characterized, by testing small samples, from which the resistance values are obtained, (static and fatigue) that are used subsequently to verify the levels of the maximum voltages expected during operation. These test campaigns have a low cost, are executed quickly (a few weeks) and typically integrate a large number of test samples to statistically consolidate the results.
- In a second step, construction details of the structure are tested, such as mechanical fastening elements (for example, T-Bolts wind turbine blade roots, airplane wing connection fastenings or tower-foundation connections in wind turbine towers), verifying that the loads transmitted by these details in actual operation are less than the resistance of the tested detail. These test campaigns have a medium cost, take a few months to complete and usually integrate several test samples, sometimes divided by groups to evaluate the effect of some specific variable, such as the operating temperature or the average load during the test.
- Finally, in the most complex and optimized structures, a sequence of tests is carried out on actual parts, in which the complete structure is checked under realistic load conditions, verifying its ability to withstand static and fatigue loads without being damaged. This sequence of tests has a very high cost and duration (more than a year for large blades) and integrates a very low number (often only one) of specimen for each test, using constant load conditions during the entire test in many cases.

The purpose of this strategy is an orderly validation of the structure, starting with the most basic tests to gradually progress to more complex tests of larger construction details. With this process, a growing knowledge of the structure and a progressive mitigation of the risks in the structure development process is achieved.

However, this strategy still leaves a significantly large gap between the level of validation of construction details (typically of representative test samples of small areas of the structure) and full-scale tests. This causes many failure modes, associated with the structural response of large sections of the component, which are only validated in the final test sequence, with the consequent increase in the risk of delays in the project and deviation in its budget, in the case of any failure in these tests.

The larger and more complex the structure to be validated, the more severe the weakness, since the costs and trial periods are greater and the design difficulty is greater.

Given this situation, in some sectors, such as aeronautics or aerospace, the performance of substructure tests is known, where complex test arrangements are created, that reproduce the boundary conditions and load application of structure sections, covering through these tests the space located between the validation at the level of construction details and the validation at the actual scale level.

In the wind sector, several blade manufacturers have developed blade subestructure testing methods, all based on longitudinal specimens that reproduce the actual design of a specific area of the structure, and where perpendicular shear loads are applied to the blade axis to reproduce bending forces equivalent to those reproduced in the complete blade tests. In these methods, shear loads larger than the actual ones are usually applied, by attempting to reproduce the actual bending moments at short load application distances, which can hinder the accuracy of the test.

As an example of state of the art, patent ES2440117 shows a beam test configuration in which the bending of a test sample supported at two points is caused by applying static and dynamic loads perpendicular to the axis of the sample in at least one point of the beam.

### Description of the invention

It is an object of the invention to create a test bench where the reproduction of any set of combined multi-axial bending, torsion, shear and axial loads is achieved, thanks to the combined application of perpendicular and parallel loads to the axis of the specimen. The loads applied by the actuators are reacted through the bench itself and of the specimen, and not on the ground or the recessed part of the bench. This means that the bench does not need a foundation and therefore can be easily transported. Moreover, the loads can be set and may vary according to the average ranges and values required during the test.

Another object of the invention is selecting and setting a specimen in the test bench. The specimen can be a segment of the wind turbine blade, the intermediate joint of a split blade or another structural element that is extended on both ends. The specimen must be secured by one side to the test bench and to a plate where the actuators react on the adjacent side. In this way, the plurality of fastening elements of the intermediate joint of a modular blade or the internal behavior of a blade section, or of any other structural element of a wind turbine (such as a tower section) can be tested. Another example can be the sectorial repair of a blade and the specific validation of that part of the blade, without resorting to a complete test.

And finally, another object of the invention is the presentation of a test method with multi-axial application that achieves highly accurate static tests and also achieves completely novel fatigue tests that have never been performed previously in a bench of these characteristics. The method includes specimen selection steps and anchoring it inside the bench. Subsequently, through the set of actuators inside the bench, two types of load application are achieved: progressive application and cyclic application. The first is applied slowly and gradually until reaching the design load or the breaking load. The second one allows a continuous cycle application where it is possible to accelerate the frequency of application and shorten the time in the tests compared to the full-scale tests.

Everything described above provides the following advantages: the bench in which this test is carried out does not require a permanent installation and allows the testing of a wide variety of topologies and specimen dimensions, with high accuracy multi-axial test load spectra. It can be tested in a term and cost much lower than that of a complete structure. Finally, an additional advantage of this test bench is its portability, with no need for any installation in the location of the test, since all efforts are reacted within the bench and its small dimensions compared to full-scale test benches. This allows to move the bench and move it to other places where the test can be carried out instead of having to move the specimen to the test center (usual circumstance at present).

### Brief description of the drawings

Below, a series of drawings is briefly described, that help to better understand the invention and that are expressly related to an embodiment of said invention that is presented as a non-limiting example thereof.
Figure 1 depicts a view of the complete blade indicating a test specimen and the extension of the specimen with its fastening accessories.
Figure 2 is a second embodiment on a modular blade and the specimen achieved with two pieces joined together.
Figure 3 is a view of the test bench and the specimen to be tested.
Figures 4, 5, 6 and 7 are different configurations of specimen loading sequences, which establish the testing method.

### Detailed description of the invention

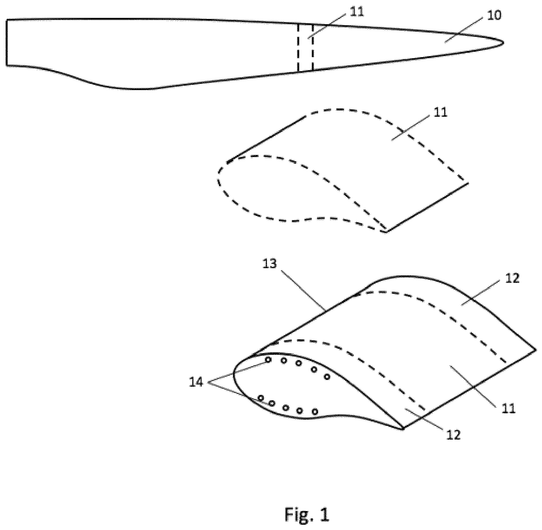

As shown in figure 1, a first embodiment of the test is the validation of a wind turbine blade (10) segment (11). Typically, it is necessary to validate blade segments where there are complex construction details (sharp thickness or geometric transitions, for example) or in the validation of recurring manufacturing defects (delamination or loss of adhesion, for example). To achieve its installation in the bench, the blade segment (11) is extended on both ends by an extension (12) where a plurality of fastening elements (14) are housed, that allow its installation in the test bench. In this particularization, neither the extension (12) nor the fastening elements (14) are tested, so they are designed to have a resistance higher to that of the blade segment (11).

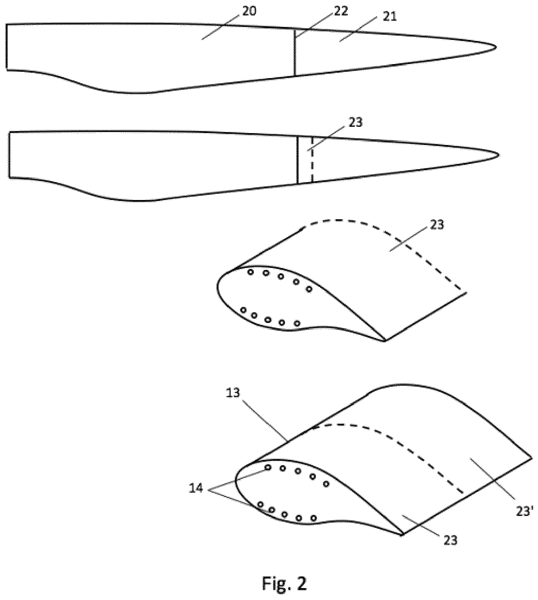

Figure 2 shows a second embodiment of the type of test for the validation of intermediate joints (22) of modular wind turbine blades, constituted by at least one root module (20) and one tip module (21) that are joined together by means of an intermediate joint (22). In this case, the specimen (13) integrated the blade segment (23) which includes the modular blade joint (22), which will usually be the same in both modules. To form a specimen able to be installed on the test bench, the specimen (13) is supplemented with another segment (23'), symmetrical to the one extracted from the blade design (23). In both segments (23, 23') the fastening to the bench will be done using the real fastening elements (14) of the modular blade design. A consequence of this position is that the test ends by testing two joints (one on each end) at the same time.

Other specifications of the type of test that can be performed on the bench is the validation of wind turbine blade root connections, with the same technique as in the previous point.

Other specifications of the test type that can be performed on the bench is the validation of wind turbine tower segments. In this case, the specimen would be made up of a complex tower element to be used, due to the connection of the tower to the foundation, the connection between tower sections or the connection of the lattice tower elements.

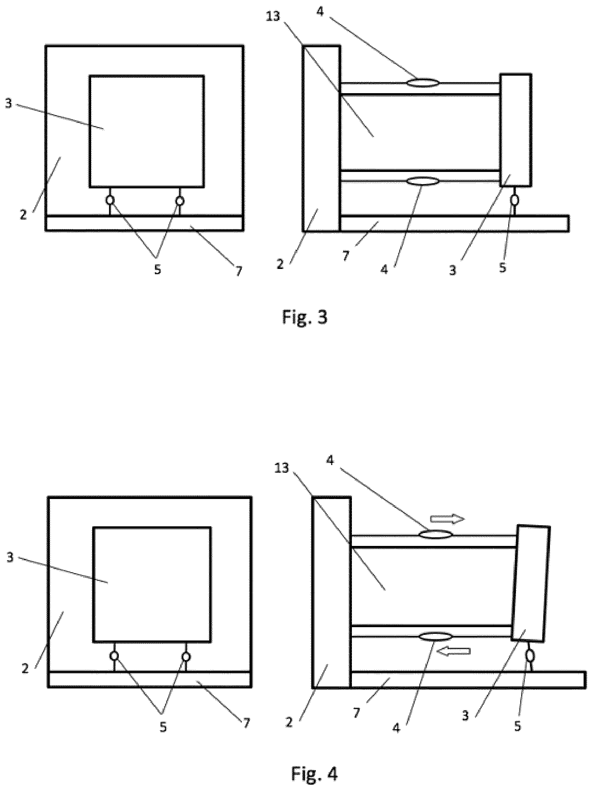

As shown in figure 3, the test bench integrates a structure made up of a vertical fixed rigid plate (2) and a horizontal structure (7) rigidly joined together. The specimen (13) is screwed using the fastening elements (14) to the rigid plate (2) on one of its ends and a mobile rigid plate (3) on the other end, using the fastening elements (14) available on the other side. The load is applied using two different types of longitudinal actuators. With at least two horizontal actuators (4) that join the fixed plate (2) and the mobile plate (3), efforts can be made parallel to the specimen shaft, causing flexion moments and controlled axial loads. With at least two vertical actuators (5) that join the mobile plate (3) to the horizontal structure (7) of the bench, perpendicular forces can be applied to the axis of the specimen, causing shear loads and controlled torque moments.

The method followed to achieve a static multi-axial test is characterized by slowly and gradually applying a set of loads until reaching the design load or specimen breakage.

The method followed to achieve a multi-axial fatigue test is characterized by cyclically applying a set of loads until it reaches the design cycles or specimen breakage. The average flexion load (and the rest of the load components) can be secured to the desired value regardless of the test assembly and specimen and actuator weights, which normally condition this value on conventional tests. The frequency of fatigue test can be chosen and speed up the test, instead of what happens in the conventional tests. All the components of the load may vary in average and amplitude during the fatigue test, generating test spectra through blocks that reproduce the most critical operational situations of the wind turbine operation.

In both static tests and fatigue tests, the sheer stresses may be adjusted to the design value by being decoupled from the flexion forces, the opposite of what normally happens in conventional tests.

In both the static and fatigue tests, the axial and torsion load can be applied to the test, independent of the flexion and shear loads. These forces cannot normally be applied in conventional tests.

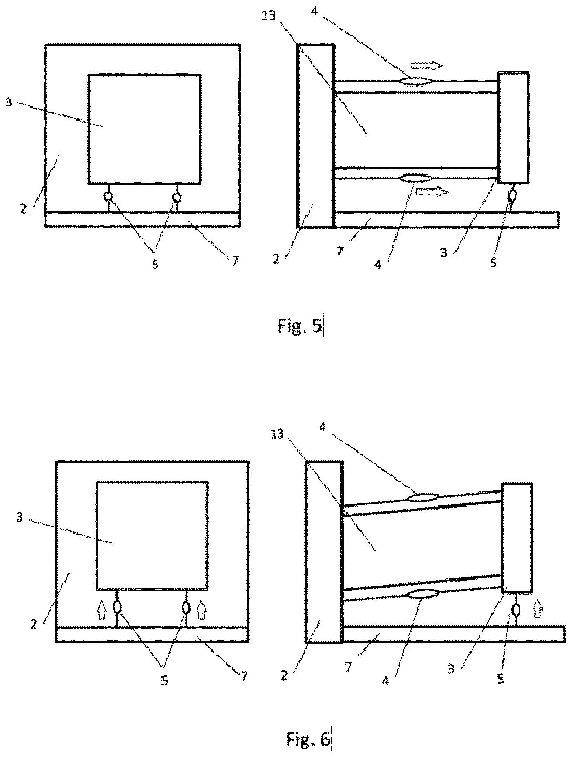

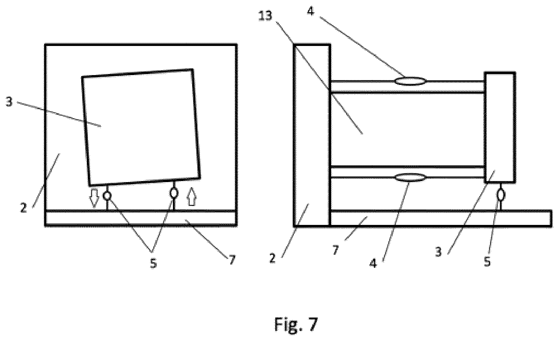

The four load types applied in the bench are shown in figures 4, 5, 6 and 7:
- flexion moment, when both horizontal cylinders (4) act in opposite directions
- axial load, when both horizontal cylinders (4) act in the same direction
- shear load, when both vertical cylinders (5) act in the same direction
- axial load, when both vertical cylinders (5) act in opposite directions

All these load configurations are reversible, they can be applied in both directions, and can be combined together.

## Claims

1. Test bench **characterized in that** it applies a set of multi-axial flexion, torsion, shear and axial loads, the tested specimen are segments (13) of longitudinal structural elements, the loads react through the bench and specimen and not through the ground or the embedment, which is why it is transportable, and **in that** it is made up of:
- a vertical fixed rigid plate (2),
- a horizontal structure (7) rigidly joined to the fixed rigid plate (2) above,
- a vertical mobile rigid plate (3),
- at least two horizontal actuators (4) disposed between the fixed rigid plate (2) and the mobile rigid plate (3), and
- at least two vertical actuators (5) disposed between the mobile rigid plate (3) and the horizontal structure (7),
and lastly, the specimens or segments (13) are fastened between the vertical fixed rigid plate (2) and the vertical mobile rigid plate (3) through a plurality of fastening elements (14).

2. The test bench according to the first claim **characterized in that** the longitudinal structural element is a segment of a blade (11).

3. The test bench according to the first claim **characterized in that** the longitudinal structural element is a segment of a modular blade (23).

4. The test bench according to the first claim **characterized in that** the longitudinal structural element is a segment of a lattice tower.

5. Static test method of a longitudinal specimen anchored to the inside of a test bench, **characterized in that**
- the slow and gradual application of a set of loads until reaching the design load or specimen breakage,
- the shear stresses are adjusted to meet the design values by being decoupled from the flexion forces,
- the axial and torsion load are included, independent of the flexion and shear loads,

6. Fatigue test method of a longitudinal specimen anchored to the inside of a test bench, **characterized in that**
- the cyclical application of a set of loads until reaching the design cycles or specimen breakage,
- the average flexion load is secured to the desired value, independent of the test assembly and specimen and actuator weights,
- the shear stresses are adjusted to meet the design values by being decoupled from the flexion forces,
- the axial and torsion load are included, independent of the flexion and shear loads,
- the frequency of the fatigue test is chosen by accelerating the test, and lastly
- all the load components can vary in average and amplitude during the fatigue test.

7. Static test method and fatigue test according to claim 5 or 6, **characterized in that** the four load types that are applied to the test bench, which are:
- the flexion moment, when both horizontal cylinders (4) act in opposite directions,
- the axial load, when both horizontal cylinders (4) act in the same direction,
- the shear load, when both vertical cylinders (5) act in the same direction, and
- the torque moment, when both vertical cylinders (5) act in opposite directions, being all these load configurations reversible, can be applied in both directions, and can be combined together.
